# NEUE EUROPÄISCHE PATENTSCHRIFT

(11) **EP 0 436 923 B2**
(45) Veröffentlichungstag und Bekanntmachung des Hinweises auf die Entscheidung über den Einspruch: **29.03.2000**
(45) Hinweis auf die Patenterteilung: 24.05.1995
(21) Anmeldenummer: 90125395.5
(22) Anmeldetag: 23.12.1990
(51) Int. Cl.: F16L 11/118

(54) **Flexible Kühlflüssigkeitsleitungen**
Flexible coolant hoses
Tuyaux flexibles pour liquide de refroidissement

(30) Priorität: 09.01.1990 DE 4000434
(43) Veröffentlichungstag der Anmeldung: 17.07.1991
(73) Patentinhaber: EMS-INVENTA AG, 8001 Zürich (CH)
(72) Erfinder: Kerschbaumer, Franz, Dr. rer. nat., Dipl.-Chem., CH-7000 Chur (CH)
(74) Vertreter: Becker Kurig Straus

(56) Entgegenhaltungen:
- EP-A- 0 270 694
- DE-A- 2 236 375
- DE-A- 3 715 251
- DE-U- 8 709 449
- GB-A- 1 175 042
- Kunststoff-Lexikon, Carl Hanser Verlag München Wien, 1981, Seiten 271 und 314
- Polymer Extrusion, Hanser Publishers Munich Vienna New York, 1986, Seiten 453-454
- Prospekt Hüls: Rohre und Druckschläuche aus VESTAMID, Oktober 1986

## Beschreibung

Die Erfindung betrifft eine flexible Kühlflüssigkeitsleitung mit hoher Hydrolyse- und Berstdruckfestigkeit für Motoren, insbesondere Fahrzeugmotoren. Mit dem Begriff flexibel wird zum Ausdruck gebracht, dass solche Leitungen auch um enge Krümmungsradien gebogen werden können, obwohl zur Herstellung relativ steife Polymere verwendet werden.

Gemäss Stand der Technik werden für Kühlflüssigkeitsleitungen mit Fasergewebe verstärkte Gummileitungen eingesetzt. Solche bevorzugt für Fahrzeugmotoren eingesetzten Gummileitungen haben den Nachteil, dass sie einerseits relativ teuer sind und trotzdem nicht den Anforderungen, besonders bei im Motorraum entstehenden hohen Temperaturen, vollständig gewachsen sind. Nach einer Betriebsdauer, die ca. 100'000 Fahrkilometern entspricht, fallen die mechanischen Eigenschaften bereits stark ab. Noch kritischer wird die Stabilität von Kühlwassergummileitungen für zukünftige Automobilmotoren, die die Temperaturen im Motorraum noch weiter ansteigen lassen als bisher, wodurch der Abfall der mechanischen Eigenschaften zusätzlich beschleunigt wird. Es sind deshalb völlig neuartige Lösungen erforderlich.

Kühlwasserleitungen, bestehend aus einer einzigen Polymerschicht, sog. Monoleitungen, finden bisher ebenfalls nur begrenzte Einsatzmöglichkeiten. Leitungen aus Polyolefinen zeigen oberhalb von 100°C eine ungenügende Berstdruckbeständigkeit. Zudem neigen Polyolefine zur Spannungsrisskorrosion gegenüber Ölen und Fetten. Polyamid-Monoleitungen weisen oberhalb von 100°C eine ungenügende Hydrolysebeständigkeit auf.

Zudem wird durch die starke Quellen von Polyamid in Kühlflüssigkeiten die Berstdruckbeständigkeit herabgesetzt. Aus diesem Grunde wird nur glasfaserverstärktes Polyamid für Teile eingesetzt, die direkt mit Kühlflüssigkeit in Kontakt kommen, da die Glasfasern den Verlust an mechanischen Eigenschaften, z.B. durch Quellung, teilweise kompensieren können. Glasfaserverstärkte Rohre sind jedoch nicht flexibel.

In der GB-A-1 175 042 wird eine nur in mehreren aufwendigen Schritten herstellbare flexible Schlauch- oder Rohrleitung beschrieben, die ein gewelltes Plastik-Innenrohr aufweist, dessen Wellungen äusserlich mit einer Gummimasse gefüllt und mit einer ungewellten Schutzschicht abgedeckt sind. Wahlweise schliesst diese Konstruktion eine zusätzliche, bevorzugt textile, Verstärkungsschicht ein, welche die unbefriedigende Bestdruckfestigkeit verbessern kann, aber in mindestens einen weiteren Verfahrensschritt aufgebracht werden muss. Eine solche Rohrkonstruktion erfüllt die hohen Anforderungen an die Flexibilität und für das heutige Niveau der Bestdruckbeständigkeit für Automobile nur ungenügend.

Es bestand daher die Aufgabe, Kühlflüssigkeitsleitungen zu schaffen, die die genannten Nachteile nicht aufweisen. Diese Aufgabe wird gelöst durch die flexible Kühlflüssigkeitsleitung gemäss Anspruch 1, wobei sich für den Einsatz als Kühlflüssigkeitsleitungen für Motoren, speziell Fahrzeugmotoren besonders Rohre mit ringförmig oder spiralig gewellter Wandung eignen. Ein Vorteil besteht darin, dass eine erfindungsgemässe Kühlflüssigkeitsleitung ohne zusätzliche Verstärkung, wie sie bei den bekannten Gummileitungen erforderlich ist, auskommt.

Es wurde überraschenderweise gefunden, dass Mehrschichtrohre mit einer Kombination von unterschiedlich wirksamen Schichten aus geeigneten Polymeren, z.B. mit einer für Kühlmittel inerten, nicht quellbaren Innenschicht und einer steifen, tragenden, besonders berstdruckfesten Aussenschicht, die genannten Mängel nicht aufweisen. Diese Schichten müssen durch eine mit den beiden Schichten verträgliche Zwischenschicht verbunden sein. Solche erfindungsgemässen Rohre werden durch Coextrusion aus den Polymerkomponenten hergestellt. und besitzen eine polyolefinische Innenschicht und Polyamid als Aussenschicht. Durch die polyolefinische im Kühlmittel nicht quellbare Innenschicht wird eine hervorragende Hydrolysebeständigkeit gewährleistet. Polyamid in der Aussenschicht gewährleistet eine hohe Berstdruckbeständigkeit und lässt die von den Automobil-Herstellern geforderten 8 bar/120°C leicht erreichen, so dass die für Kühlflüssigkeitsleitungen aus Gummi unumgängliche Fasergewebe-Verstärkung entfallen kann.

Die erforderliche Flexibilität, die sich aus der Notwendigkeit ergibt, auf engem Raum starke Leitungs-Krümmungen zu ermöglichen, ist durch sog. Wellrohre erreichbar, deren Wandung durch nach dem Stand der Technik bekannten Verfahren z.B. ringförmig oder spiralig gewellt wurde.

Die erfindungsgemäss gewellten Rohre sind wesentlich flexibler als die verstärkten Gummileitungen nach dem Stand der Technik. Erfahrungsgemäss führt das Verbiegen von glatten Rohren aus festen polymeren Materialien bei grösseren Durchmessern zum Verknicken. Das ist besonders für glatte Leitungen mit mehr als 15 mm Innendurchmesser aus erfindungsgemässen Polymeren und für solche mit mehr als 0,4 mm Gesamtwandstärke von Bedeutung. Der Anteil der berstdruckfesten Aussenschicht beträgt dabei bevorzugt 25% bis 95% dieser Gesamtwandstärke.

Zusätzliche Vorteile solcher erfindungsgemässen Leitungen sind nicht nur das geringere Gewicht sondern auch die geringeren Rohstoff- und Herstellungskosten.

Berstdruckfeste Materialien für die Aussenschicht sind Polyamide, bevorzugt Homo- oder Copolyamide aus linearen aliphatischen Monomeren mit 6 bis 12 C-Atomen, z.B. aus Laktamen, Aminocarbonsäuren oder Diaminen und Dicarbonsäuren, oder solche aus aromatischen Monomeren mit 6 bis 12 C-Atomen, z.B. alkylierte oder nicht alkylierte aromatische Diamine oder Dicarbonsäuren oder solche aus cycloaliphatischen Monomeren, wie z.B. alkylierte oder nicht alkylierte Diamine oder Dicarbonsäuren mit 6 bis 20 C-Atomen, mit einem oder mehreren Cyclohexan-Ringen, die ihrerseits über Akylengruppen verbunden sein können. Beispielhaft genannt seien die semikristallinen Polyamide der Reihe PA 6 bis PA 12 und der Reihen PA 6,6 bis PA 6,12 sowie PA 12,6 bis PA 12,12. Es eignen sich auch Mischungen und Blends der genannten Polyamide, wobei Qualitäten mit Viskositäten über 10'000 Pa.s (Pascalsekunden) besonders bevorzugt sind.

Inerte, quellungsbeständige Polymere für die Innenschicht sind halogenierte oder nicht halogenierte Homo- oder Copolyolefine, deren Mischungen oder Blends. Bevorzugt sind neben Homopolyolefinen die Copolyolefine des Ethylen bzw. Propylen mit weiteren α - Olefinen. Geeignet sind chlorierte, besonders auch fluorierte Polyolefine und Copolyolefine und auch Polyvinylchlorid.

Die innere Schicht ist mit der Aussenschicht durch eine mit beiden verträgliche Zwischenschicht genügend fest verbunden. Dafür eignen sich in besonderem Masse Polyolefine oder Copolyolefine, die reaktionsfähige Gruppen, besonders Carboxyl- oder Säureanhydridgruppen, durch Pfropfung oder durch die genannten Comonomeren erhalten haben.

Zum Vergleich mit der Erfindung wird im folgenden anhand der Zeichnungen eine gewollte Kühlflüssigkeitsleitung die aus zwei koaxialen Schichten besteht beschrieben. Dabei zeigen
- Fig. 1: einen Längsschnitt durch diese Kühlflüssigkeitsleitung;
- Fig. 2: eine Querschnittsansicht entlang der Linie A-A; und
- Fig. 3: ein Belastungsdiagramm.

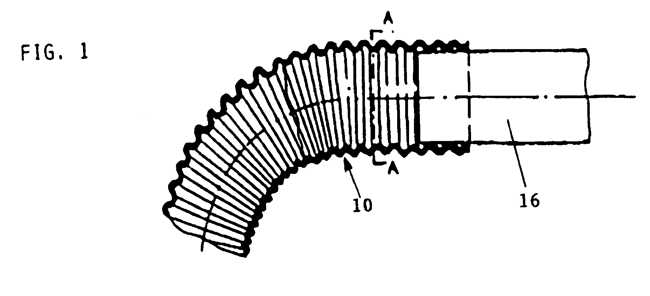

Fig. 1 zeigt einen Teil einer flexiblen Kühlflüssigkeitsleitung 10 mit einer ringförmig gewellten Wandung, die an ihrem gezeigten offenen Ende auf ein Rohr 16 aufgesetzt ist.

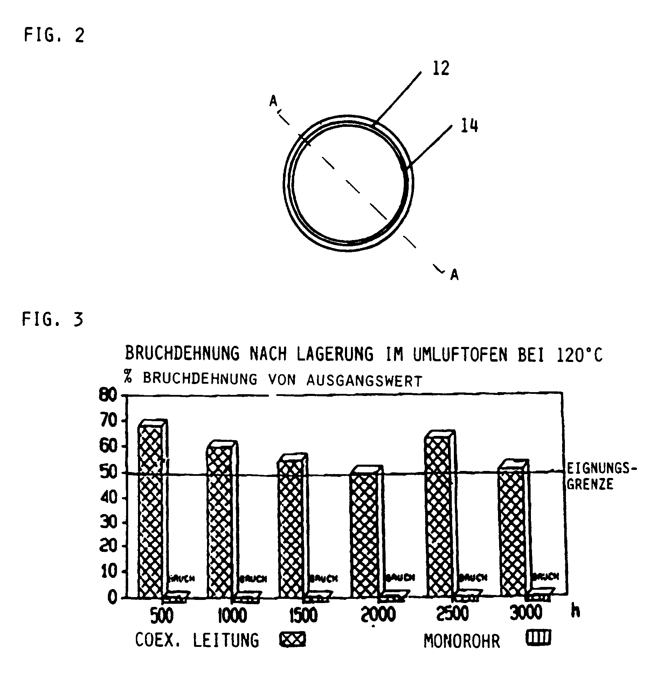

Nach Fig. 2 besteht die Kühlflüssigkeitsleitung 10 aus zwei koaxial ineinander angeordneten Schichten 12 und 14, deren radiale Wandstärken in der Zeichnung im Vergleich zum Durchmesser leicht vergrössert dargestellt sind. Die äussere Schicht 12 ist als berstdruckfeste Schicht ausgebildet, während die innere Schicht 14 aus einem gegenüber dem Kühlmittel inerten, nicht quellbaren Material besteht. Beide Schichten 12 und 14 bestehen aus miteinander verträglichen Polymeren.

Fig. 3 zeigt als Diagramm die Bruchdehnung bei Dauerbelastung bei 120°C bis zu 3'000 Stunden einer coextrudierten Kühlflüssigkeitsleitung mit 8mm Aussendurchmesser mit 0,8mm Polyamid 6-Aussenschicht vom Typ GRILON R47W40 und 0,2mm Polyolefin-Innenschicht vom Typ Polymer XE 3153 im Vergleich zu einem Monorohr mit 1,0 mm Wandstärke aus dem gleichen Polyamid 6-Typ, beide während der 120°C-Lagerung mit der Kühlflüssigkeit Wasser/Diethylenglykol 1 : 1 gefüllt und anschliessend geprüft. Die 50% Limite gilt für die Verwendung in der Automobil-Industrie als Eignungsgrenze.

GRILON R 47 W 40 ist ein weichmacherhaltiges PA 6 der Firma EMS-CHEMIE AG. Viskosität 20'000 Pa.s/270°C, 122,6 N.

Polymer XE 3153 ist ein mit ca. 5 Gew.-% Maleinsäureanhydrid gepfropftes Polypropylen. MFI (ASTM D 1238) 4,0 g/10 mm/230°C, Dichte 0,90, Schmelzpunkt 165°C.

Nachfolgend sind in den Tabellen 1 und 2 einige Daten für die Herstellung von zwei Wellrohren mit verschieden grossen Durchmessern wiedergegeben.

**TABELLE 1**

| Coextrusion von Kühlflüssigkeitsleitungen/Wellrohren | |
|---|---|
| Extruder 1 | Extruder 2 |
| Material R 47 W 40 | Material XE 3153 |
| Heizung | Heizung |
| Zone 1-4 245°C | Zone 1-4 240°C |
| Schnecke 45mm | Schnecke 30mm |
| Kopftemperatur 245°C | |
| Vakuum 100 mb | |
| Abzug 7 m/min | |

**TABELLE 3**

| Berstdruckfestigkeit coextrudierter Kühlflüssigkeitsleitungen | | | |
|---|---|---|---|
| Rohrdurchmesser | mm | 18 | 40 |
| Gesamtwandstärke | mm | 1 | 2 |

| Innenschicht | | | |
|---|---|---|---|
| Material | Typ | XE 3153 | XE 3153 |
| Dicke | mm | 0,2 | 0,2 |

| Aussenschicht | | | |
|---|---|---|---|
| Material | Typ | R 47 W 40 | R 47 W 40 |
| Dicke | mm | 0,8 | 1,8 |
| Berstdruck/120°C | bar | 8 | 10 |

## Patentansprüche

1. Flexible Kühlflüssigkeitsleitung (10) mit hoher Hydrolyse- und Berstdruckbeständigkeit für Motoren, insbesondere Fahrzeugmotoren, die aus mehreren, durch Coextrusion fest miteinander verbundenen Schichten (12, 14) besteht, und die zumindest auf Teilstücken eine ringförmig oder spiralförmig durchgehend gewellte Wandung aufweist,
bei welcher die innere Schicht (14) aus halogenierten oder nicht halogenierten Homo- oder Copolyolefinen, aus Mischungen oder Blends derselben besteht,
wobei zwischen der inneren und einer mit dieser nicht verträglichen äußeren Schicht (12), die aus einem Homo- oder Copolyamid, aus Mischungen oder Blends derselben besteht, eine mit beiden verträgliche Zwischenschicht angeordnet ist, die ein durch Pfropfung oder Copolymerisation mit funktionellen Gruppen versehenes Polyolefin bzw. Copolyolefin ist.

2. Kühlflüssigkeitsleitung gemäß Anspruch 1, bei der die Homo- oder Copolyamide aus linearen aliphatischen Monomeren mit 6 bis 12 C-Atomen, aus aromatischen Monomeren mit 6 bis 12 C-Atomen oder aus cycloaliphatischen Monomeren mit 6 bis 20 C-Atomen bestehen.

3. Kühlflüssigkeitsleitung gemäß Anspruch 1, bei der die innere Schicht aus chlorierten Homo- oder Copolyolefinen oder aus PVC besteht.

4. Kühlflüssigkeitsleitung gemäß einem der Ansprüche 1 bis 3, bei der die Wandstärke der äusseren berstdruckfesten Schicht (12) 25% bis 95% der Gesamtwandstärke ausmacht.

5. Kühlflüssigkeitsleitung gemäß einem der Ansprüche 1 bis 4, bei der die Berstdruckfestigkeit bei 100°C über 8 bar liegt.

## Claims

1. Flexible coolant conduit (10) having high resistance to hydrolysis and bursting pressure, for engines, in particular vehicle engines, which comprises layers (12, 14) firmly bonded to one another by coextrusion, and which has, at least over portions thereof, an annularly or spirally-corrugated wall, wherein the inner layer (14) consists of halogenated or non-halogenated homo- or copolyolefins, or mixtures or blends thereof, wherein between the inner and the outer layer (12) consisting of a homo- or copolyamide or mixtures or blends thereof and which is not compatible with the inner layer, an intermediate layer that is compatible with both is arranged between the inner and outer layer (12) and wherein the intermediate layer is a polyolefin or copolyolefin provided with functional groups by grafting or copolymerisation.

2. Coolant conduit according to claim 1, wherein the homo- or copolyamides comprise linear aliphatic monomers having 6 to 12 C atoms, aromatic monomers having 6 to 12 C atoms or cycloaliphatic monomers having 6 to 20 C atoms.

3. Coolant conduit according to claim 1, wherein the inner layer comprises chlorinated or non-chlorinated homo- or copolyolefins or PVC.

4. Coolant conduit according to one of claim 1 to 3, wherein the wall thickness of the outer burst pressure-resistant layer (12) constitutes 25% to 95% of the total wall thickness.

5. Coolant conduit according to one of claim 1 to 4, wherein the bursting pressure resistance is about 8 bar at 100°C.

## Revendications

1. Conduite souple (10) pur liquide de refroidissement, présentant une résistance élevée à l'hydrolyse et à l'éclatement sous pression, destinée à des moteurs, en particulier à des moteurs de véhicules, et constituée de plusieurs couches (12, 14), solidement liées les unes aux autres par coextrusion, ladite conduite présentant, au moins sur certains tronçons, une paroi à ondulation continue formée d'anneaux ou d'une hélice, dans laquelle la couche intérieure (14) est constituée d'homopolyoléfines ou de copolyoléfines, halogénées ou non, qui ne sont pas compatibles avec la couche extérieure (12), ou de mélanges ou d'alliages de tels polymères, et dans laquelle est disposée, entre la couche intérieure (14) et la couche extérieure (12), une couche intermédiaire compatible avec ces deux couches, dans laquelle la couche intermédiaire est constituée d'une oléfine ou copolyoléfine dotée, par greffage ou copolymérisation, de groupes fonctionnels.

2. Conduite pour liquide de refroidissement, conforme à la revendication 1, dans laquelle l'homopolyamide ou le copolyamide est constitué de monomères aliphatiques linéaires comportant de 6 à 12 atomes de carbone, de monomères aromatiques comportant de 6 à 12 atomes de carbone, ou de monomères cycloaliphatiques comportant de 6 à 20 atomes de carbone.

3. Conduite pour liquide de refroidissement, conforme à la revendication 1, dans laquelle la couche intérieure est constituée d'homopolyoléfines ou de copolyoléfines, chlorées ou non, ou de PVC.

4. Conduite pour liquide de refroidissement conforme à l'une des revendications 1 à 3, dans laquelle l'épaisseur de la couche extérieure (12) résistante à l'éclatement sous pression représente de 25 à 95 % de l'épaisseur totale de paroi de la conduite.

5. Conduite pour liquide de refroidissement, conforme à l'une des revendications 1 à 4, pour laquelle la pression limite de résistance à l'éclatement vaut plus de 8 bars à 100°C.
